Europäisches Patentamt

(19) European Patent Office

Office européen des brevets

(11) Publication number: **0 009 534**
A1

## (12) EUROPEAN PATENT APPLICATION

(21) Application number: 79101961.5

(22) Date of filing: 15.06.79

(51) Int. Cl.³: **H 04 J 1/12**
**H 04 B 9/00, H 04 B 3/32**
**H 04 J 1/08**

(30) Priority: 20.06.78 IT 6843178

(43) Date of publication of application:
16.04.80 Bulletin 80/8

(84) Designated Contracting States:
DE FR GB NL

(71) Applicant: CSELT Centro Studi e Laboratori
Telecomunicazioni S.p.A.
Via Guglielmo Reiss Romoli, 274
I-10148 Turin(IT)

(72) Inventor: Bosotti, Luciano
V. Cristoforo Colombo n.52
Gruglisco - Torino(IT)

(74) Representative: Frhr. Riederer v. Paar, Anton Dipl.-Ing.
Müllerstrasse 31
D-8000 München 5(DE)

(54) Wavelength division system with reduced cross-talking between each of the channels.

(57) Digital-transmission system on optical waveguide, in which a plurality of channels is transmitted as wavelength division multiplex on the same waveguide between pairs of transmitting and receiving stations, each transmitting station emitting an optical carrier modulated by a numerical data flow, characterized in that each channel is associated to synchronizing means (SF1, SF3...SFn, RO2,...ROn,SF;RO';SY), able to generate and maintain at the receiver a relative time delay between the channel itself and the adjacent channels in the multiplex, responsible for the interference, said delay being of the order of half the signalling period of the data flow, or of the order of half the signalling period of the quickest data flow.

./...

Fig. 1

Fig. 2

Fig. 3

*Lorenz & Riederer*
*Patentanwälte*

0009534

Lorenz & Riederer, Postfach 1320, D-8035 Gauting 2

Dipl.-Phys. Willy Lorenz
Dipl.-Ing. Anton Frhr. Riederer von Paar

CSELT
Centro Studi e Laboratori
Telecomunicazioni S.p.A.
Via Guglielmo
Reiss Romoli, 274
I-10148 Torino, Italy

15th June, 1979

Our file: c 104-j,EP

TITLE MODIFIED
see front page

"Improvements in or relating to wavelength division
transmission systems"

The present invention relates to optical-fibre digital transmission systems, and more particularly it concerns improvements in wavelength division transmission systems.

The term "wavelength division multiplexing" refers to the transmission, over an only waveguide, of a plurality of optical carriers, with duly differentiated frequencies, each one modulated by a different electric signal. Suitable mixing devices launch, into the common wave, the power emitted by various sources whereas at the fibre output suitable demixing elements separate the various optical carriers and send them on to the photodetectors in order to reconvert them into electrical form.

The studies and tests effectuated on transmission systems of this kind have shown the existence of phenomena causing degradation of the transmission quality; among these it can be cited the imperfect operation of multiplexing-demultiplexing devices due to mechanical tolerances inherent in their realization, and the optical-source defects, dependent on thermal dieft, aging, or fabrication defects

Resulting from these degenerative phenomena we observe at the receiver side inhomogeneous signal attenuations on the different channels of the multiplexer and cross-talk among the signals transferred along adjacent channels, due also to the interference among different carriers, caused by the spectral width of the light emission. Whereas the effects of inhomogeneous attenuations can be easily eliminated by using emission powers different for each channel, cross-talk is a worse problem to face, as the spectral width of the light emission gives rise to cross-talk also in presence both of multiplexing units and of a perfect stability in the sources. Thus the various optical carriers must be greatly spaced, consequently reducing the system transmission capacity.

To overcome cross-talk effects in wavelength division digital transmission systems compensating methods have been suggested, based on the correction at electric signal level obtained through the reconversion of the received light signal.

More particularly, in the paper C7.3 presented by H. Ishio and T. Miki at the IOOC 77 Conference held in Tokyo, a comparating system has been described in which to the electrical signal obtained at the output of the photodetector associated to the channel of the wavelength division multiplex, further correcting electrical signals have been added, obtained by the conversion of the interfering optical signals, said correction signals being duly attenuated and sign-inverted with respect to the interfering signals.

This mode of operation, that is similar to the one used for transmission in radio-links, in waveguide or in cable, presents a number of inconvenients.

In fact, it is necessary to underline that the signal outgoing from a photodetector has the characteristics of a random process whose mean value represents the "useful signal". It is associated to a photodetecting and multiplying noise originated from oscillations which are instantaneous with respect to said mean value, and it has an amplitude proportional to the level of the received signal. As obviously the noises associated to two different signals are mutually delayed, the compensating operation carried out as described above, can correct only the degenerative effects of the interfering signal but is unable to correct the degenerative effects of the associated noise. On the contrary it can be observed that the noise effects are in this case emphasized. Obviously this problem had not to be faced in non-optical transmissions.

In addition, it is necessary to know exactly the level of the optical interfering signal, to allow a real correction without any danger of further signal degradations. Finally, the components used for the generation of the correcting signals and their coupling to the signal to be corrected (operational amplifiers and resistances) are intrinsically noisy and imperfect oving to drift and instability phenomena.

Thus of great interest are the studies oriented to supply a correction method that does not require to operate on the electrical signals obtained through conversion of optical signals.

Studies effectuated by the inventor, and disclosed in a paper soon to be published, have demonstrated that, for a given level of interfering optical signals, the performance degradation of a multiplex optical channel is considerably dependent on the relative time delays existing between the signalling sequences on the interfered channel as well as on the channels originating the interference, and that this dependence increases by increasing the level of the interfering signals.

More particularly, maximum performance degradation occurs for in-phase signallings; this term means that at the receiver the maximum values of the instantaneous transmitted power (in correspondance of which the decision is effectuated) basically are reached at the same instant for all the channels.

On the contrary, the degradation is minimum, and can become even negligible, when the sequences are duly mutually delayed, so that the decision on a channel is effectuated when the optical power present on the interfering channels is at minimum level.

It is a particular object of the present invention a digital-transmission system on optical waveguide, in which a plurality of channels is transmitted as wavelength division multiplex on the same waveguide between pairs of transmitting and receiving station emitting an optical carrier modulated by a numerical data flow; in which each channel is associated to synchronizing means able to generate and maintain at the receiver a relative time delay between the channel itself and the adjacent channels in the multiplex responsible for the interference, said delay being of the order of half the signalling period of the data flow, or of the order of half the signalling period of the quickest data flow.

By this system a further degenerative effect can be avoided, due to photodetecting and multiplying noise associated to each signal; in fact the synchronizing means act before the reconversion into electrical form and, as the interfering channels are practically in quadrature with the interfered channel, the decision on each symbol transmitted on said channel is effectuated when the symbols on the adjacent channels, and consequence associated noise, are to minimum or null level.

Yet, the knowledge of the level of the interfering signal is not required, as only its time position is affected. Finally, the means causing the delay are intrinsically more stable and precise than the devices necessary for extracting the correction electrical signal.

The characteristics of the invention will become clearer from the following description of some embodiments thereof given by way of example and not in a limiting sense, depicted in the annexed drawings in which:

- Fig. 1 shows the application of the invention to a digital transmission system with unidirectional transmission line and transmitting and receiving terminals concentrated at the opposite ends of the vector;

- Figures 2 to 5 show some variations of the scheme of Fig. 1;

- Fig. 6 shows the application of the invention to a transmission system with unidirectional line and transmitting (or receiving) terminals distributed along the vector;

- Fig. 7 shows a detail of a variation of the scheme of Fig. 6;

- Fig. 8 shows the application to a transreceiving terminal of a system with bidirectional vector;

- Figures 9a, 9b, 9c are possible schemes of the synchronizing device of Fig. 8;

- Fig. 10 shows some graphs depicting the invention performances.

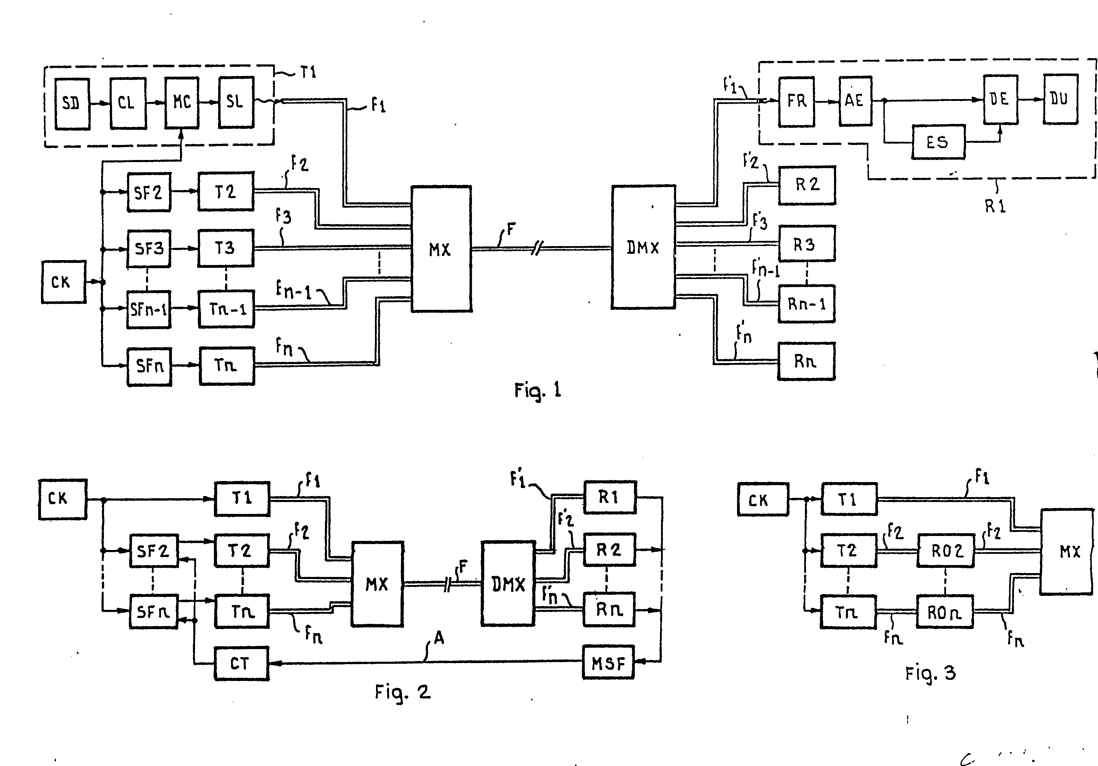

In Fig. 1 a system is represented for digital transmission on multiplex wavelength division, comprising a plurality of transmitting stations T1, T2, T3 ... Tn-1, Tn concentrated at an end of an only unidirectional optical waveguide F, and a plurality of receiving stations R1, R2, R3 ... Rn-1, Rn concentrated at the opposite end of guide F. Transmitting station T1 comprises a digital data source SD, line encoder CL, a channel modulator MC, a light source SL (for instance a photoemitting diode or a laser) emitting a radiation having a wavelength $\lambda 1$, modulated by the electrical signal outgoing from modulator MC. The other transmitting stations are realized in an analogous way, and they will comprise sources emitting radiations with wavelengths $\lambda 2, \lambda 3 \ldots \lambda n-1, \lambda n$. Optical waveguides f1, f2, f3 ... fn-1, fn collect the light radiations emitted by the various light sources and convey them to an optical mixer MX that transfers them onto guide F. At the other end of the guide a demixer DMX separates the different wavelengths and sends them, through the respective trunks of waveguide $f'_1$, $f'_2$, $f'_3 \ldots f'_{n-1}$, $f'_n$ to receivers R1, R2, R3, Rn-1, Rn comprising a photodetector FR, an equalizer amplifier AE, a device ES extracting the synchronism from the data flow, a decision device DE and a utilizing device DU.

For simplicity of description it will be assumed that transmitting stations adjacent in the drawing are allotted to adjacent channels in the multiple (i. e. light sources with adjacent wavelengths).

As the devices building up both the receiver and the transmitter are well known in the art and they do not make part of the invention, they will not be described in further details.

According to the invention, each transmitter, and namely the channel modulator MC, is driven by a synchronizing signal generated by a main clock and directly sent to the transmitter e. g. T1 and, through the respective delay means SF2, SF3 ... SFn-1, SFn, to transmitters T2, T3 ... Tn-1, Tn: the delay means are chosen so as to allow the signals transmitted on adjacent channels to be received as relatively time delayed signals in one-half signalling period (assuming the symbol frequency to be the same on all channels).

For instance, receivers R1, R3 ... Rn-1 must receive signals with the same phase, whereas receivers R2, R4 ... Rn must receive signals having the same phase, but delayed by half a period with respect to the signals received by R1, R3 ... Rn-1;

Therefore, considering the most general case in which the fibre length $F$ and the spacing in frequency of the light sources of transmitters T1, T2, T3 ... Tn-1, Tn are such that the phase relationships determined in transmission are not maintained in reception, delaying devices SF3...SFn-1 must delay the signal emitted by CX so much as to solely compensate the relative phase delays imposed by the system to the signals transmitted by T3 ... Tn-1; delay devices SF2 ... SFn must further delay the signals transmitted by T2... Tn by half a signalling period.

As the propagating characteristics of a fibre present a considerable time stability, it will be sufficient to adjust delay devices SF2, SF3 ... during the realization of the transmission system in order to make sure of keeping in time the wanted phase relationships.

If also small changes in said characteristics are to be considered, the system can be made adaptive.

This solution is represented in Fig. 2, where MSF denotes a device for measuring the phase delays among the various received channels; MSF sends the information on the phase delays to a control device CT, that drives the delay devices SF2... SFn so as to keep the desired phase conditions.

The information on the relative phase delays are transmitted from MSF to CT through an auxiliary channel A that could also be incorporated in the multiplex at a distance (measured in terms of wavelength) from the nearest signalling channel greater than the one which separates the adjacent signalling channels. In this way, in fact, the necessity is avoided of allotting also to this auxiliary channel a well determined timing sequence.

The scheme of Figures 1, 2 relates to delay devices operating on the timing signal (electrical) of transmitters T1 ... Tn.

Any way the phase delay could be obtained by acting on the optical signal outgoing of the transmitters, as shown in Fig. 3, where references R02 ... R0n denote some optical delay lines, inserted on the guides f2 ... fn.

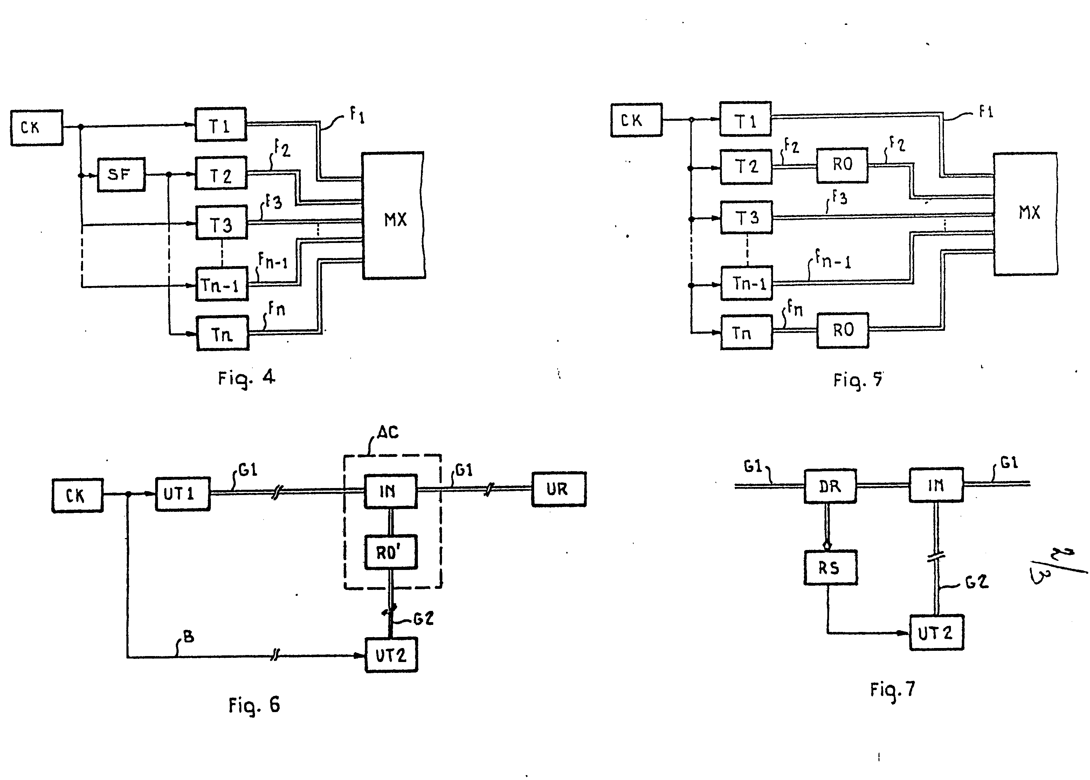

In case of short distance connections, it can be supposed with good approximation that the phase relationships are maintained between the signals transmitted on the various channels. The transmission system of Fig. 1 can then assume the simplified configuration of Fig. 4, in which the clock CK directly drives the transmitters of one half of the channels e. g. the transmitters of odd place T1, T3 ... Tn-1, whilst the transmitters having even place receive the signal of CK delayed by half a period in a delay device SF.

In case optical delay lines are utilized, the scheme is the one of Fig. 5; the transmitters having odd places are directly connected to mixer MX through their guides f1, f3 ...fn-1;on the guides f2 ... fn relative to the transmitters of even place, optical delay lines R0 equal to one another are inserted.

Also for the scheme of Fig. 4 the adaptive control of the time delays can be used, in order to compensate for variations in the characteristics both of the optical waveguides and of the sources.

Figures 6, 7 illustrate the application of the invention to a further configuration of a wavelength division transmission system. In the drawing, reference UT1 denotes a unit comprising a plurality of transmitters similar to transmitters T1 ... Tn of Figures 1 to 5, and an optical mixer, analogous to mixer MX, realizing the multiplexing on optical waveguide G1; reference UR denotes the corresponding receiving unit, composed of a mixer and a plurality of receivers, corresponding to demixer DMX and to receivers R1... Rn respectively, of Figures 1 to 5.

0009534

It is supposed that the channels transmitted on guide G1 must be added, at a certain distance d1 from UT1, to one or a plurality of channels coming from a further transmitting unit UT2, placed at a distance d2 < d1 from guide G1, connected to UT2 through a guide trunk G2 and an optical coupling device AC. For simplicity, it will be assumed that UT2 comprises a single transmitter and that the auxiliary channel corresponds to a wavelength for instance greater than the one of the n channels coming from UT1.

It is clear that, being assumed d2<<d1, the signals transmitted by UT2 will have higher optical power than the signals transmitted by UT1, and then they will highly interfere on the latter, making them almost unintelligible.

To overcome this deficiency, according to the present invention device AC will comprise not only a coupler IN, of any known type, that transfers on guide G1 the energy carried by guide G2, but also an optical delay line R0': the delay introduced by R0' must take into account the time delays due to the propagation along G1, and it will be such that in reception it will result the wanted half a period time delay.

Delay line R0' can be adjusted at the beginning of the system operation by exploiting the timing information UT2 receives from the main clock CK of the transmitting unit UT1, through an auxiliary channel B.

As an alternative, the delay of the signal of UT2 can be obtained by electrical means, acting on the timing signal supplied by CK, as it happens in the case depicted in Figures 1, 2, 3. In this case, the information related to the requested delay for the signals of UT2 may also be obtained by means of an auxiliary channel connecting the receiver UR to the timing unit of UT2, to which channel units analogous to devices MSF, CT of Fig. 2 are attested. In such a way an adaptive structure may be obtained, analogously to what shown in Fig. 2. The information relative to the network timing, instead of being supplied by CK or UR on an auxiliary channel, can be extracted at the insertion point as shown in Fig. 7; the coupling device is preceded by a shunting device DR, complementary with IN, that extracts from the line a fraction of the power of the transmitted signal and supplies it to a synchronism recovery device RS, that drives in turn transmitter UT2. By obvious modifications, the scheme of Figures 6,7 may be extended to the case of n identical units placed along line G. In this latter case unit UR acts as a concentration stage. As no main terminal exists, the synchronization may be obtained by aytonomous devices associated to each terminal.

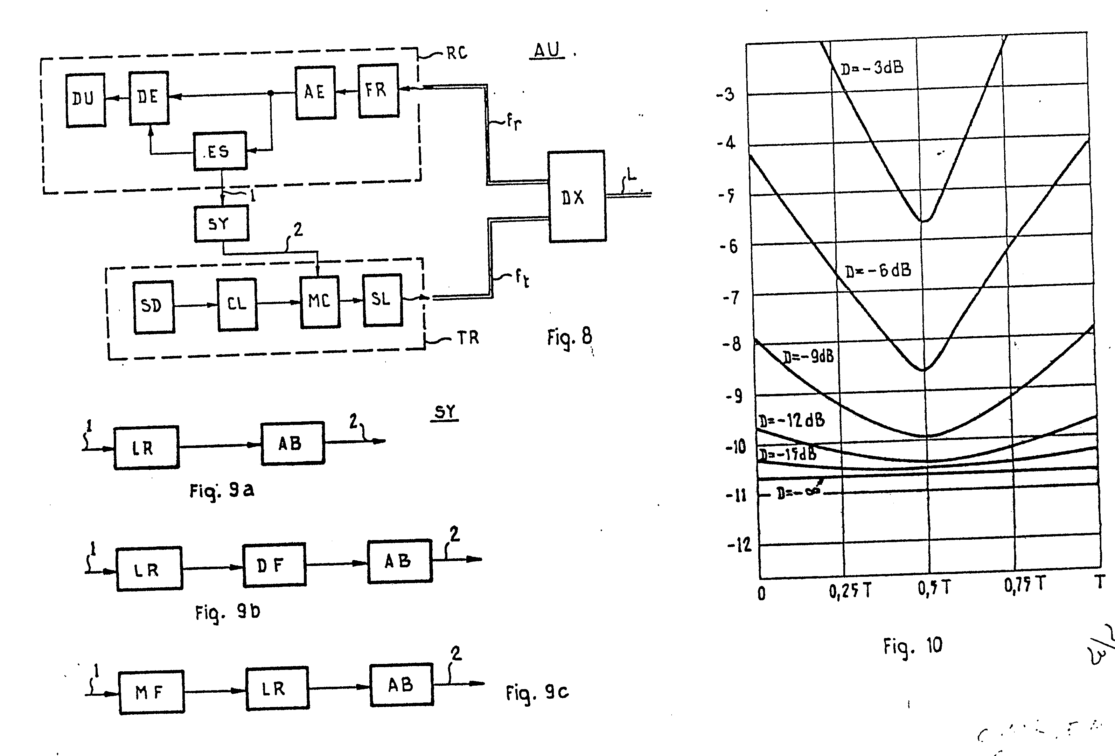

Fig. 8 depicts the application of the invention to a transreceiving terminal (subsriber equipment) of a digital transmission system in full duplex. For sake of simplicity, the case is considered of two channels only, one for each transmission direction. The subscriber equipment AU comprises a receiver RC and a transmitter TR realized like receiver R1 and transmitter T1 of Fig. 1; these two devices are coupled, through respective trunks of optical waveguide fr, ft and an optical duplexer DX, to a single optical guide L forming the full-duplex transmission line. According to the present invention, between synchronism device ES designed to extract the synchronism in the receiver and the channel modulator MC a synchronizing device SY is inserted, whose structure is depicted in Fig. 9; SY realizes the time delay between input and output signals, at the substriber equipment AU, necessary to eliminate the crosstalk.

If the data flow entering the receiver is isochronous with the one outgoing from the transmitter (i. e. the two flows have the same speed), device SY will comprise (Fig. 9a) a delay line LR receiving through wire 1 the channel synchronism signal of the receiver, extracted from ES, and delays it by a time basically equal to half the signalling period; the signal delayed in LR is supplied to an enabling device AB whose output 2 is connected to the channel modulator MC of the transmitter.

In this way it is obtained that data flows transferred into and out of the substriber equipment results basically in quadrature.

If the flows are not isochronous, a distinction must be made between a greater flow at the input or at the output. In the former case (Fig. 9b) the synchronizing device SY comprises a frequency divides DF that receives the timing signal outgoing of LR and divides it by the ratio between the speed of the two flows; the signal resulting from the division is then supplied to the enabling device AB.

In the second case (Fig. 9c) the delay line LR is preceded by a frequency multiplier MF, that multiplies the frequency of the signal present on wire 1 by the ratio between the speeds of the two flows, and supplies at the output a signal having a period equal to the signalling period of the quickest flow; this signal is delayed in LR by a time of the order of half a period and is then supplied to AB which times the emission from the transmitter.

It becomes clear that in case of non-isochronous flows the delay time depends on the period of the signals of the quickest flow.

The condition that, in case of non isochronous flows, the signals present on the adjacent channels be delayed at the receiver by half the period of the signal of the quickest flow, must be satisfied also in the systems represented in Figures 1 to 7.

In Figure 10 a number of curves are plotted that show the trend of the error probability (whose logarithm is plotted in the ordinate) in function of time delay at the receiver, for different crosstalk levels D, with reference to a single interfering channel.

It is clear that the invention allows to drastically reduce the error probability even and mainly at high crosstalk levels. It is evident that the multiplexing distances between the channels could be reduced, preventing that the crosstalk increase causes too high degradation of the transmission quality.

PATENT CLAIMS

1) Digital-transmission system on optical waveguide, in which a plurality of channels is transmitted as wavelength division multiplex on the same waveguide between pairs of transmitting and receiving stations, each transmitting station emitting an optical carrier modulated by a numerical data flow, characterized in that each channel is associated to synchronizing means (SF1, SF3... SFn, R02, ... R0n; SF; R0'; SY), able to generate and maintain at the receiver a relative time delay between the chan - nel itself and the adjacent channels in the multiplex, responsible for the interference, said delay being of the order of half the signalling period of the data flow, or of the order of half the signalling period of the quickest data flow.

2) Digital transmission system according to claim 1, wherein the transmitting and receiving stations are concentrated at the opposite ends of a common waveguide, wherein the characteristics of the guides and the inter-channel spacings are such that the phase relations among the adjacent channels are differentiated by the guide in a selective way for the various channels, characterized in that said synchronizing means comprise a clock which directly drives one of the transmitting stations and drives the others through respective delay devices (SF2 ... SFn), eachone of them introducing and keeping on the signals generated by the main clock, a time delay that, added to the one introduced by the waveguide for the relative channel, brings the receiver to a time delay between adjacent channels that is of the order of half the signalling period on each channel or on the quickest channel.

3) System according to claim 1, in which the transmitting and receiving stations are concentrated at the opposite ends of a unidirectional waveguide and in which the characteristics of the waveguide and of the spacings among the channels are such that the phase relation- ships are maintained among the different channels, characterized in that said synchronizing means comprise a main clock which directly drives the transmitters associated to every two channels in the multiplex, and a delay device connected with the output of said main clock, and drives the transmitters associated to the remaining channels.

4) System according to claims 2 and 3, characterized in that said delay device or eachone of said delay devices is able to introduce a delay varying in time according to the variations of the characteristics of the transmitting stations and/or of the waveguide, and in that to the receiving and transmitting stations are associated, respectively, a device (MSF) measuring the time delay among adjacent channels and a timing checking device (CT) driven by said device measuring the time delay (MSF), and able to control time delay variations introduced by said delay device or devices (SF2.. SFn; SF).

5) Transmission system according to claim 1, in which the transmitting and receiving stations are concentrated at the opposite ends of a unidirectional optical waveguide, characterized in that said synchronizing means comprise a plurality of optical delay lines, eachone associated to one of the channels whose signals must be delayed, and placed between the respective transmitter and a channel multiplexing device.

6) Transmission system according to any one of the previous claims, comprising at least a further transmitting station located near the path of the optical waveguide and associated to means designed to insert into the wavelength division multiplex the relative channel (s), characterized in that said synchronizing means are associated also the eachone of said further stations and are driven by a network synchronism instruction supplied by the main clock or by the receiving terminal, or extracted from the data flow in correspondence with the insertion point of a further channel (s).

7) Transmission system according to claim 1, in which at each end
of the guide one or more transreceiving devices are provided,
and in which the receiver of each end comprises means for extracting the timing information from the received data flow,
characterized in that said synchronizing means (SY) make the
receiver and the transmitter of each terminal to be coupled, and
comprise a delay line (LR) that receives the signals outgoing of
said synchronism extracting devices (ES) and delays them by
half a period, as well as an enabling device (AB) that receives
the delayed signals and sends them to the terminal transmitter as
transmission  enabling signal.

8) Device according to claim 7, in which the received data flow is
at a speed higher than the transmitted data flow, characterized
in that said synchronizing means (SY) also comprise a frequency
divider (DF), placed between the delay line (CR) and the enabling
device (AB), and able to divide the frequency of the delayed signal
by a factor equal to the ratio between the speeds of the data flows.

9) Device according to claim 7, in which the transmitted data flow
has a speed greater than the received data flow, characterized in
that said synchronizing means (SY) comprise also a frequency
multiplier (MF) inverted before the delay line (LR) and able to
multiply the frequency of the signal supplied by the synchronism
extracting devices (MS) by a factor equal to the ratio between the
two speeds.

Fig. 1

Fig. 2

Fig. 3

0009534

Fig. 4

Fig. 5

Fig. 6

Fig. 7

2/3

0009534

Fig. 8

AU

Fig. 9a

SY

Fig. 9b

Fig. 9c

Fig. 10

## DOCUMENTS CONSIDERED TO BE RELEVANT

| Category | Citation of document with indication, where appropriate, of relevant passages | Relevant to claim |
|---|---|---|
| P,A | <u>DE - A1 - 2 708 638</u> (SIEMENS AG.) <br> + Page 2, lines 6 to 14 + <br> -- | 1 |
| A | <u>DE - A1- 2 658 113</u> (COMPAGNIE INDUSTRIELLE DES TELECOMMUNICA - TIONS ) <br> + Page 1, claim1; page 2, lines 5 to 10 + <br> -- | 1 |
| A | <u>GB - A - 1 514 556</u> (DECCA) <br> + Page 1, lines 12 to 20; page 1, lines 27 to 30; page 3, claim 1 + <br> ---- | 1 |

**CLASSIFICATION OF THE APPLICATION (Int. Cl.²)**

H o4 J 1/12
H O4 B 9/OO
H O4 B 3/32
H O4 J 1/O8

**TECHNICAL FIELDS SEARCHED (Int.Cl.²)**

H O4 B 3/O2
H O4 B 3/32
H O4 B 9/OO
H O4 B 15/OO
H O4 J 1/OO
H O4 J 1/O2
H O4 J 1/O8
H O4 J 1/12
H O4 L 5/OO
H o4 L 5/O6
H O4 L 27/OO
H O4 L 27/1O

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 07-09-1979 | DRÖSCHER |

EPO Form 1503.1 06.78